# EUROPÄISCHE PATENTSCHRIFT

(11) **EP 0 590 417 B1**
(45) Veröffentlichungstag und Bekanntmachung des Hinweises auf die Patenterteilung: **20.03.1996**
(21) Anmeldenummer: 93114864.7
(22) Anmeldetag: 15.09.1993
(51) Int. Cl.: F25D 25/04, F25D 3/11, B65G 19/28, B65G 19/06, B65G 19/20

(54) **Vorrichtung zum Temperieren von Gegenständen**
Device for conditioning the temperature of objects
Dispositif pour le conditionnement thermique d'articles

(30) Priorität: 29.09.1992 DE 4232641
(43) Veröffentlichungstag der Anmeldung: 06.04.1994
(73) Patentinhaber: Linde Aktiengesellschaft, D-65189 Wiesbaden (DE)
(72) Erfinder: Sonnentag, Michael, Dipl.-Ing., D-81379 München (DE)
(74) Vertreter: Kasseckert, Rainer

(56) Entgegenhaltungen:
- DE-A- 2 228 564
- GB-A- 1 226 056
- GB-A- 1 557 886
- US-A- 2 774 460
- US-A- 3 004 407
- US-A- 3 114 248
- US-A- 3 376 710
- US-A- 4 479 363
- US-A- 4 788 831

## Beschreibung

Die Erfindung betrifft eine Vorrichtung zum Temperieren von Gegenständen mit einem ein wärmeveränderndes Medium enthaltenden als langgestreckten Trog ausgebildeten Behälter und einer Fördereinrichtung zum Fördern der Gegenstände durch das Medium, wobei als Fördereinrichtung Räumelemente vorgesehen sind, die an einer oberhalb des im Trog befindlichen Mediums parallel zur Längsrichtung des Troges angeordneten Transporteinrichtung befestigt sind und in das Medium hineinragen.

Eine derartige Vorrichtung ist in der GB-A- 1 557 886 beschrieben.

Üblich sind auch Tauchfroster zum Gefrieren von Gefriergut, die ein Bad einer kryogenen Flüssigkeit aufweisen, durch das ein Förderband läuft, das das zu gefrierende Gut aus dem Bad herausfördert. Das Gefriergut wird entweder direkt in das Bad abgeworfen oder auf ein Band aufgelegt, das das Gefriergut in das Bad befördert. Ein derartiger Tauchfroster ist beispielsweise in "Gas aktuell, Messer Griesheim GmbH, Heft 29, Ausgabe Juni 1985, Seite 10" beschrieben.

Bei derartigen Tauchfrostern können Probleme auftreten, wenn die Dichte des Gefrierguts so beschaffen ist, daß das Gefriergut aufschwimmt. In diesem Fall kann das Gefriergut nicht in einer vorgegebenen Zeit durch das Bad befördertwerden. Probleme treten auch bei solchen Gütern auf, die zur Materialanhäufung neigen. Beispielsweise können Fette oder Zucker miteinander oder mit dem Förderband verkleben, so daß auch in diesem Fall keine definierte Verweilzeit des Gefriergutes im Bad eingehalten werden kann, oder ein verklumptes, undefiniertes Produkt entsteht.

Der vorliegenden Erfindung liegt die Aufgabe zugrunde, eine Vorrichtung der eingangs genannten Art zur Verfügung zu stellen, die einfach aufgebaut ist und eine effektive Temperierung der Gegenstände ermöglicht.

Diese Aufgabe wird erfindungsgemäß durch die kennzeichnenden Merkmale a) und b) des Anspruchs 1 gelöst.

Der Trog weist einen nach oben offenen V-förmigen Querschnitt auf. Ein derartiger Trog ist sehr leicht z.B. durch Umbiegen eines Bleches zu fertigen. Falls die Transporteinrichtung als umlaufendes Band oder mindestens eine umlaufende Kette ausgebildet ist, so sind die Umlenkrollen oder Umlenkräder vorzugsweise am oberen Ende eines Schenkels des V-förmigen Querschnitts des Troges derart angeordnet, daß die Drehachsen der Umlenkrollen oder Umlenkräder senkrecht zu diesem Schenkel stehen. Bei plattenförmiger Ausbildung der Räumelemente sind die Kanten der Platten vorteilhafterweise parallel zu den Wänden des Troges angeordnet.

Der Trog ist in Längsrichtung schräg nach unten geneigt. Er weist am unteren Ende eine Aufnahmeeinrichtung und am oberen Ende eine Abgabeeinrichtung für die Gegenstände auf. Die am unteren Ende des Troges aufgegebenen Gegenstände werden also vom unteren Ende des Troges durch das Medium hindurch zum oberen Ende des Troges transportiert und dort z.B. über einen nach unten offenen Schacht abgeworfen.

Die Räumelemente können gemäß einer Weiterbildung des Erfindungsgedankens auch becherförmig ausgebildet sein.

Mit der Erfindung wird eine Vorrichtung zum Temperieren von Gegenständen geschaffen, die ein definiertes Verweilzeitspektrum der Gegenstände auch bei aufschwimmendem oder zur Materialanhäufung neigendem Gut gewährleistet. Die Vorrichtung ist sehr einfach im Aufbau und ihre Einzelteile sind leicht zu fertigen. Außerdem weist sie wenig bewegliche Teile auf, wodurch eine hohe Zuverlässigkeit erreicht wird. Darüberhinaus ist die Vorrichtung platzsparend und kann überall Verwendung finden, wo Güter temperiert werden sollen. Dabei ist die Vorrichtung nicht nur auf das klassische Einsatzgebiet von Tauchfrostern, nämlich das Gefrieren von Lebensmitteln, beschränkt, sondern kann auch z.B. zum Gefrieren von pharmazeutischen oder medizinischen Lösungen, von Gewebe- oder Bakterienkulturen und sonstigen Suspensionen eingesetzt werden.

Darüber hinaus eignet sich die erfindungsgemäße Vorrichtung zur Erreichung einer Reaktionsverlangsamung oder eines Reaktionsstops bei chemischen Prozessen (z.B. bei Schmelzklebern oder Reaktionsharzen). Die Vorrichtung kann auch dazu verwendet werden, ein bestimmtes Gefüge oder Kristallgitter von Metallen zu erzielen. Außer zum Abkühlen oder Gefrieren von Gegenständen kann die Vorrichtung aber auch zum Erwärmen oder Erhitzen von Gegenständen, z.B. zum Frittieren von Lebensmitteln, eingesetzt werden.

Aufgrund der erfindungsgemäß vorgesehenen Zwangsförderung der Gegenstände treten keine Probleme bei Materialien auf, die auf dem Medium aufschwimmen oder wie z.B. Fette oder Zucker zusammenkleben können.

Als wärmeveränderndes Medium sind vor allem kryogene Flüssigkeiten, wie z.B. flüssiger Stickstoff, vorgesehen. Grundsätzlich sind aber auch andere Kühlmedien, z.B. Kohlenwasserstoffe (Hexan) oder Alkohole (Glycol) möglich. Zum Erwärmen oder Erhitzen von Gegenständen eignen sich als Heizmedium z.B. kochendes Wasser oder heißes Öl.

Im folgenden soll die Erfindung anhand eines in den Figuren schematisch dargestellten Ausführungsbeispiels näher erläutert werden.

Es zeigen:
- Figur 1: eine perspektivische Darstellung eines Tauchfrosters
- Figur 2: einen Querschnitt durch den in Figur 1 gezeigten Tauchfroster.

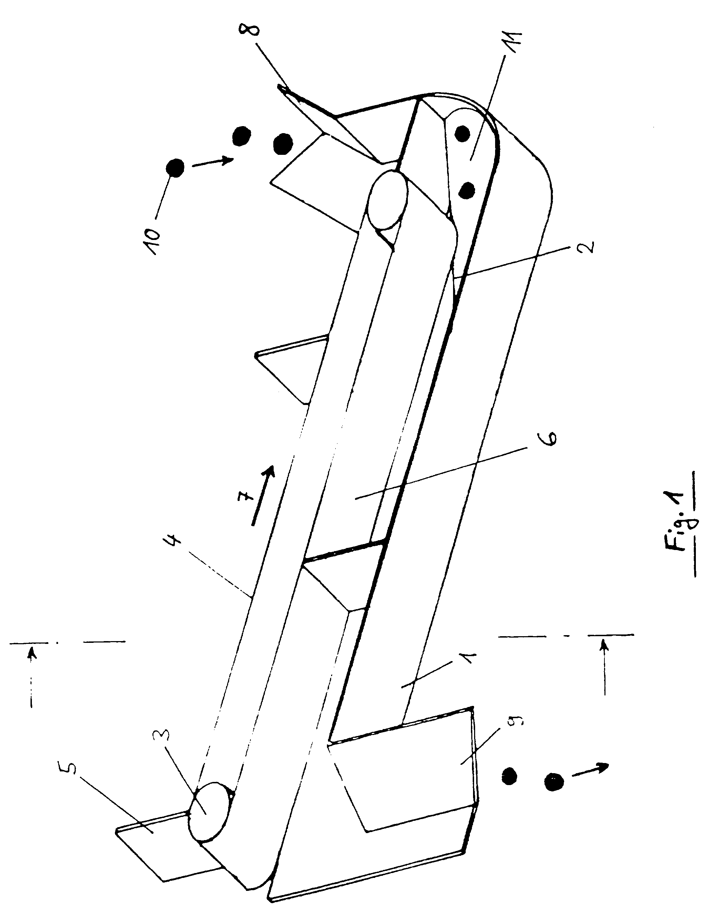

Die in Figur 1 gezeigte erfindungsgemäße Vorrichtung zum Temperieren von Gegenständen wird als Tauchfroster zum Gefrieren von Gefriergut eingesetzt. Der Tauchfroster besteht aus einem langgestreckten Trog 1 mit V-förmigem Querschnitt, wobei die Spitze des Vs nach unten zeigt. Der Trog 1 ist in Längsrichtung in einem Winkel von ca. 30° gegen die Horizontale nach unten geneigt. Im Trog 1 befindet sich ein Bad 11 einer kryogenen Flüssigkeit. Im vorliegenden Fall wird als kryogene Flüssigkeit flüssiger Stickstoff verwendet, der den Trog 1 bis zum Flüssigkeitsspiegel 2 ausfüllt. Am oberen Rand einer der beiden Trogwände sind an den längsseitigen Enden des Troges 1 Umlenkrollen 3 angeordnet. Über die Umlenkrollen 3 wird ein Gurtband 4, das z.B. aus Textil bestehen kann, parallel zur Längsrichtung des Troges 1 geführt. Sowohl die Umlenkrollen 3 als auch das Gurtband 4 sind außerhalb des flüssigen Stickstoffs angeordnet und kommen mit diesem nicht in Berührung. An der Außenfläche 6 des umlaufenden Gurtbandes 4 sind plattenförmig ausgebildete Räumelemente 5 so befestigt, daß sie quer zur Umlaufrichtung 7 des Gurtbandes 4 von diesem abstehen. Während des Umlaufs des Gurtbandes 4 tauchen die Räumelemente 5 in den flüssigen Stickstoff ein und fördern das Gefriergut 10 durch den flüssigen Stickstoff hindurch. Am unteren längsseitigen Ende des Troges 1 ist eine Aufnahmeeinrichtung 8 und am oberen Ende eine Abgabeeinrichtung 9 für das Gefriergut 10 vorgesehen.

Beim Betrieb des Tauchfrosters wird das Gefriergut 10, im vorliegenden Fall zu gefrierendes Lebensmittelprodukt, über die Aufnahmeeinrichtung 8 in das Bad 11 des flüssigen Stickstoffs eingegeben und mittels der Räumelemente 5 trogaufwärts befördert. Die Räumelemente 5 sind so geformt, daß sie im wesentlichen den gesamten Innenraum des Troges 1 ausfüllen, so daß auch bei kleindimensioniertem Gefriergut eine zuverlässige Zwangsförderung sichergestellt ist. Das Gefriergut 10 wird mittels der Räumelemente aus dem flüssigen Stickstoff herausgefördert und durch die über dem Flüssigkeitsspiegel 2 des flüssigen Stickstoffs befindliche Stickstoffgasatmosphäre befördert. Das im oberen Teil des Troges 1 befindliche Stickstoffgas bewirkt eine Kalthaltung des Tauchfrosters bis hin zur Abgabeeinrichtung 9. Über die als nach unten offener Schacht ausgebildete Abgabeeinrichtung 9 wird das Gefriergut schließlich aus dem Tauchfroster z.B. in einen Verpackungsbehälter abgeworfen.

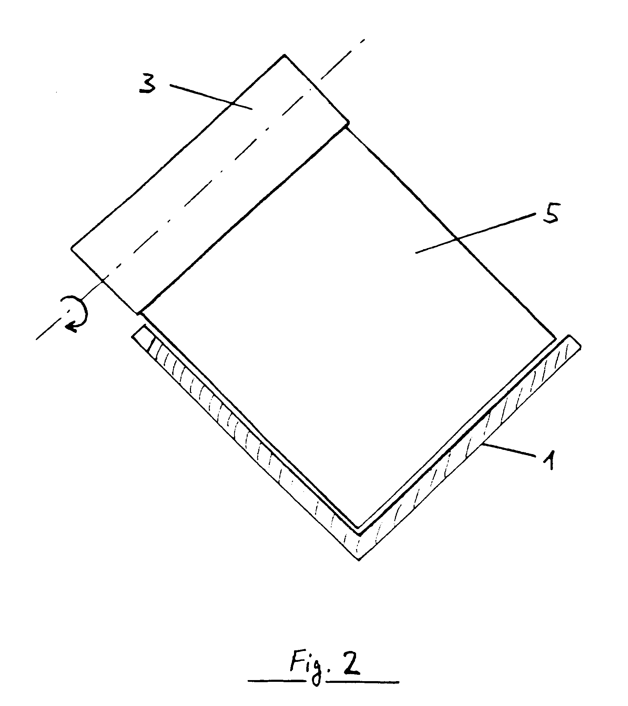

In Figur 2 ist ein Querschnitt durch den in Figur 1 dargestellten Tauchfroster gezeigt. In dieser Darstellung wird die V-förmige Ausbildung des Troges 1 deutlich. Die Trogwände können auf einfache Weise durch Umbiegen eines Bleches gefertigt werden. Am oberen Rand einer Trogwand ist eine Umlenkrolle 3 so angeordnet, daß ihre Drehachse parallel zur Flächennormale dieser Trogwand gerichtet ist. Mittels der Umlenkrollen 3 wird ein im Querschnitt nicht darstellbares Gurtband senkrecht zur Blattebene, d.h. parallel zur Längsrichtung des Troges geführt. An dem Gurtband sind plattenförmig ausgebildete Räumelemente 5 befestigt, deren Kanten parallel zu den Trogwänden des Troges 1 gerichtet sind.

## Patentansprüche

1. Vorrichtung zum Temperieren von Gegenständen (10) mit einem ein wärmeveränderndes Medium enthaltenden als langgestreckten Trog ausgebildeten Behälter (1) und einer Fördereinrichtung (4,5) zum Fördern der Gegenstände durch das Medium, wobei als Fördereinrichtung Räumelemente (5) vorgesehen sind, die an einer oberhalb des im Trog befindlichen Mediums parallel zur Längsrichtung des Troges angeordneten Transporteinrichtung (4) befestigt sind und in das Medium hineinragen, **dadurch gekennzeichnet,** daß
a) der Trog einen nach oben offenen V-förmigen Querschnitt aufweist und
b) der Trog in Längsrichtung schräg nach unten geneigt ist, wobei am unteren Ende eine Aufnahmeeinrichtung (8) und am oberen Ende eine Abgabeeinrichtung (9) für die Gegenstände (10) angeordnet sind.

2. Vorrichtung nach Anspruch 1, dadurch gekennzeichnet, daß die Räumelemente (5) becherförmig ausgebildet sind.

## Claims

1. Apparatus for conditioning the temperature of objects (10), having a container (1) which contains a heat-changing medium and is configured as an elongated trough and having a conveying device (4, 5) for conveying the objects through the medium, clearing elements (5) being provided as the conveying device, which clearing elements are fastened to a transport device (4) disposed parallel to the longitudinal direction of the trough, above the medium present in the trough, and project into the medium, characterized in that
a) the trough has an upwardly open, V-shaped cross-section and
b) the trough is inclined obliquely downwards in the longitudinal direction, there being disposed at the lower end a receiving device (8) and at the upper end a delivery device (9) for the objects (10).

2. Apparatus according to Claim 1, characterized in that the clearing elements (5) are of bucket-shaped configuration.

## Revendications

1. Dispositif pour le conditionnement thermique d'articles (10) avec un récipient (1) constitué par un bac allongé contenant un fluide de modification thermique et un dispositif de transport (4, 5) pour le transport des articles à travers le fluide, dans lequel il est prévu en guise de dispositif de transport des éléments de dragage (5), qui sont fixés à un dispositif de transport (4) disposé au-dessus du fluide se trouvant dans le bac parallèlement à la direction longitudinale du bac et plongent dans le fluide, caractérisé en ce que
a) le bac présente une section transversale en V ouverte vers le haut, et
b) le bac est incliné obliquement vers le bas en direction longitudinale, un dispositif de chargement (8) étant prévu à l'extrémité inférieure et un dispositif de déchargement (9) étant prévu à l'extrémité supérieure pour les articles (10).

2. Dispositif suivant la revendication 1, caractérisé en ce que les éléments de dragage (5) sont configurés en forme de godets.
